# EUROPEAN PATENT APPLICATION

(11) **EP 2 618 212 A1**
(43) Date of publication of application: **24.07.2013**
(21) Application number: 13151391.3
(22) Date of filing: 16.01.2013
(51) Int. Cl.: G03B 21/20, G02B 27/09, H04N 9/31, F21V 8/00, G03B 37/04

(54) **Asymmetrically tapered integrator rod**

(30) Priority: 20.01.2012 US 201213354678
(71) Applicant: Christie Digital Systems USA, Inc., Cypress, CA 90630 (US)
(72) Inventor: Niemen, John M., Waterloo, Ontario N2L 4R6 (CA)
(74) Representative: Read, Matthew Charles

(57) **Abstract**

An integrator rod (22') is set forth having an input face (24), an output face (26) and four side walls for internally reflecting light from the input face (24) through the output face (26) as a rectangular beam according to a predetermined aspect ratio, wherein only one of the side walls tapers from the output face (26) to the input face (24) for balancing brightness between opposite sides of the rectangular beam.

## Description

### BACKGROUND OF THE INVENTION

### 1. Field of the Invention

The present invention relates in general to projection systems, and more particularly to an asymmetrically tapered integrator rod for balancing the brightness on the left and right hand sides of a projected image.

### 2. Description of the Related Art

Optical integrator rods are well known components used primarily in illumination systems for electronic projectors. An optical integrator rod is a hollow or solid internally reflective "light pipe" which uses multiple reflections of a focused light source to obtain homogenization of round or irregular patterns of illumination and convert them into a uniform rectangular pattern. This pattern can be imaged onto a panel such as a DMD (Digital Micromirror Device) by a relay lens system and then projected to a screen. Thus, the optical integrator rod is used to improve uniformity and efficiently match the aspect ratio of the illumination source to the panel.

There are two basic types of reflective integrators: a "tunnel" type made of four mirrors, and a solid glass integrator or "solid rod integrator". This latter type is more efficient than the former since it works on lossless multiple reflections using TIR (the Total Internal Reflection) of the glass rod.

Although conventional integrator rods are in the shape of a rectangular parallelepiped, tapered integrator rods are known where the taper along the length of the rod is symmetric on two or four sides.

Brightness uniformity is an important feature of projection systems that incorporate integrator rods. However, occasionally, brightness asymmetry can occur in a projector without an easily identifiable root cause.

The inventor has discovered that the shape of the integrator rod can affect brightness uniformity and can be used to correct brightness asymmetry in situations where the root cause of the brightness uniformity problem is unknown.

### SUMMARY OF THE INVENTION

It is an aspect of the present invention to provide an integrator rod design that corrects brightness asymmetry in a projection system in situations where the root cause of the brightness uniformity problem is unknown.

According to an embodiment, an asymmetrically tapered integrator rod is used to balance the brightness on the left and right hand sides of a projected image.

Preferably, the input end of the rod is made smaller in one dimension than the output end. In one embodiment, the dimension of the input face is approximately ¾ - ⁷/₈ that of the output face. Preferably, the dimension of the input face is approximately 13/16 that of the output face.

The above aspects can be attained by an integrator rod, comprising an input face, an output face and four side walls for internally reflecting light from the input face and transmitting the light through the output face as a rectangular beam according to a predetermined aspect ratio, wherein only one of the side walls tapers from the output face to the input face for balancing brightness between opposite sides of the rectangular beam

These together with other aspects and advantages which will be subsequently apparent, reside in the details of construction and operation as more fully hereinafter described and claimed, reference being had to the accompanying drawings forming a part hereof, wherein like numerals refer to like parts throughout.

### BRIEF DESCRIPTION OF THE SOLE DRAWINGS

Figure 1 is a schematic representation of conventional integrator rod for receiving light from a lamp in a projector.

Figure 2 is a perspective view of an integrator rod according to an embodiment of the invention.

### DETAILED DESCRIPTION OF THE PREFERRED EMBODIMENTS

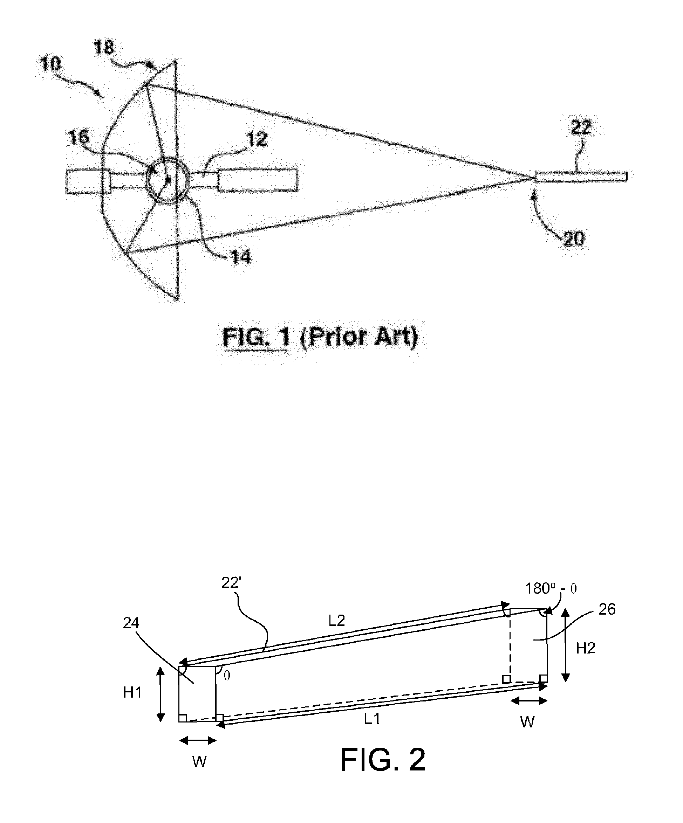

FIG. 1 shows the general operating principle of a typical lamp projector 10. As shown, light is first generated by the lamp 12 having a bulb 14 located at a first focal point 16 of ellipsoid reflector 18. Light is then re-imaged at a second focal point 20 that is co-incident with integrator rod 22. As discussed above, the illumination pattern output from lamp 12 is converted within integrator rod 22 into a uniform rectangular pattern. The rectangular light beam output from integrator rod 22 is then imaged onto a DMD (Digital Micromirror Device) by a relay lens system (not shown) and is then projected to a screen. The principles of the invention, as set forth in detail below, apply equally to other types of projectors where an integrator rod is used.

As discussed above, the inventor has discovered that asymmetrically tapering the integrator rod 22 balances the brightness on the left and right hand sides of a projected image in situations where the projector exhibits brightness asymmetry the root cause(es) of which is(are) unknown.

As shown in Figure 2, the design of the integrator rod 22' according to an embodiment of the invention is asymmetric in the sense that only one side of it is tapered. In the illustrated embodiment, the input face 24 is made smaller in height than the output face 26 (i.e. H1<H2 and L1<L2), while the width (W) remains constant.

### EXPERIMENTS

Experiments were conducted to compare brightness uniformity using an asymmetric tapered rod 22' as shown in Figure 2 with a conventional symmetric integrator rod.

First, simulations were run using a projector model that was noted to have a brightness uniformity issue, wherein the lamp intensity profile at the input of the rods was centered for different integrator rod configurations. Intensity maps were then generated via simulation and a calculation of brightness uniformity was performed. The simulation results showed left and right brightnesses of a projected image relative to the center brightness using a conventional integrator rod to be approximately 98% and 91%, respectively, as compared to 95% and 94%, respectively, for the asymmetrically tapered integrator rod according to the present invention.

On the strength of the foregoing simulations, experimental verification was performed using three samples of a ¹³/₁₆ height (i.e. H1=(13/16)×H2) tapered rod design on three different projectors. Standard optical tests were performed to measure performance of the asymmetrically tapered rod designs against baseline measurements for the conventional symmetrical integrator rod. The experimental results are shown in the following Table, where the three samples are identified as Tapered 1, Tapered 2, and Tapered 3, and the three different projectors are identified as projectors 1, 2 and 3:

| **Projector** | **Integrator** | **Brightness** | **Sequential Contrast** | **Brightness Uniformity** |
|---|---|---|---|---|
| 1 | Baseline | 1.00 | 1.00 | 1.14 |
| | Tapered 1 | 1.10 | 1.03 | 0.96 |
| | Tapered 2 | 1.10 | 1.03 | 0.97 |
| | Tapered 3 | 1.09 | 1.03 | 0.94 |
| 2 | Baseline | 1.00 | 1.00 | 1.18 |
| | Tapered 1 | 1.05 | 1.02 | 1.02 |
| | Tapered 2 | 1.05 | 1.02 | 1.03 |
| | Tapered 3 | 1.07 | 1.02 | 1.03 |
| 3 | Baseline | 1.00 | 1.00 | 1.19 |
| | Tapered 1 | 1.05 | 1.03 | 1.13 |
| | Tapered 2 | 1.07 | 1.03 | 1.14 |
| | Tapered 3 | 1.10 | 1.03 | 1.14 |

In all cases the tapered rod designs improved the brightness and sequential contrast, as well as the brightness uniformity, where (brightness uniformity) = (left hand side brightness)/(right hand side brightness). It will be noted that the experimental data corroborates the simulation results discussed above, that an asymmetrically tapered integrator rod can be used to balance brightness uniformity of a projector that is displaying uneven brightness from left to right. Additionally, although not shown in Table 1, colour uniformity (i.e. of a white field test pattern) has also been shown to improve using the tapered integrator rod of the present invention.

The present invention has been described with respect to balancing the brightness on the left and right hand sides of a projected image, although a person of skill in the art will appreciate that there are other applications, such as edge blending between multiple adjacent projected images in a multiple projector arrangement.

The many features and advantages of the invention are apparent from the detailed specification and, thus, it is intended by the appended claims to cover all such features and advantages of the invention that fall within the true spirit and scope of the invention. Further, since numerous modifications and changes will readily occur to those skilled in the art, it is not desired to limit the invention to the exact construction and operation illustrated and described, and accordingly all suitable modifications and equivalents may be resorted to, falling within the scope of the invention.

## Claims

1. An integrator rod, comprising an input face, an output face and four side walls for internally reflecting light from said input face and transmitting said light through said output face as a rectangular beam according to a predetermined aspect ratio, wherein only one of said side walls tapers from said output face to said input face for balancing brightness between opposite sides of said rectangular beam.

2. The integrator rod of claim 1, wherein one dimension of the input face is approximately ¾ - ⁷/₈ that of the output face.

3. The integrator rod of claim 2, wherein said one dimension of the input face is approximately ¹³/₁₆ that of the output face.

4. A projector including an integrator rod as claimed in any preceding claim.

5. The projector of claim 4 wherein the integrator rod is configured to balance the brightness of opposite sides of the projected image.

6. First and second projectors each including a respective integrator rod as claimed in any preceding claim and configured to project adjacent images, wherein the rods are configured to provide edge blending between the adjacent images.
